# EUROPÄISCHE PATENTSCHRIFT

(11) **EP 3 751 106 B1**
(45) Veröffentlichungstag und Bekanntmachung des Hinweises auf die Patenterteilung: **16.02.2022**
(21) Anmeldenummer: 20179158.9
(22) Anmeldetag: 10.06.2020
(51) Int. Cl.: F01N 3/20, F01N 3/08, F01N 13/00, F01N 9/00, F01N 3/22

(54) **ABGASNACHBEHANDLUNGSSYSTEM UND VERFAHREN ZUR ABGASNACHBEHANDLUNG EINES VERBRENNUNGSMOTORS**
EXHAUST SYSTEM UND METHOD FOR CLEANING EXHAUST GAS
SYSTÈME ET MÉTHODE DE PURIFICATION DES GAZ D'ÉCHAPPEMENT

(30) Priorität: 12.06.2019 DE 102019115960
(43) Veröffentlichungstag der Anmeldung: 16.12.2020
(73) Patentinhaber: VOLKSWAGEN AG, 38440 Wolfsburg (DE)
(72) Erfinder: Carstensen, Asmus, 38557 Osloß (DE); Schulenburg, Thomas, 38550 Isenbüttel (DE); Wendenburg, Stefan, 38550 Isenbüttel (DE); Resch, Stefan, 38444 Wolfsburg (DE); Semke, Artur, 38446 Wolfsburg (DE)
(74) Vertreter: Gulde & Partner

(56) Entgegenhaltungen:
- EP-A1- 3 660 287
- WO-A1-2017/153665
- DE-A1-102011 053 742
- US-A- 5 753 188
- US-A1- 2014 230 408

## Beschreibung

Die Erfindung betrifft ein Abgasnachbehandlungssystem für einen Verbrennungsmotor sowie ein Verfahren zur Abgasnachbehandlung eines Verbrennungsmotors mit einem solchen Abgasnachbehandlungssystem gemäß dem Oberbegriff der unabhängigen Patentansprüche.

Die aktuelle und eine zukünftig immer schärfer werdende Abgasgesetzgebung stellen hohe Anforderungen an die motorischen Rohemissionen und die Abgasnachbehandlung von Verbrennungsmotoren. Dabei stellen die Forderungen nach einem weiter sinkenden Verbrauch und die weitere Verschärfung der Abgasnormen hinsichtlich der zulässigen Stickoxid-Emissionen eine Herausforderung für die Motorenentwickler dar. Bei Ottomotoren erfolgt die Abgasreinigung in bekannter Weise über einen Drei-Wege-Katalysator, sowie dem Drei-Wege-Katalysator vor- und/oder nachgeschaltete weitere Katalysatoren. Bei Dieselmotoren finden aktuell Abgasnachbehandlungssysteme Verwendung, welche einen Oxidationskatalysator oder ein NOₓ-Speicherkatalysator, einen Katalysator zur selektiven katalytischen Reduktion von Stickoxiden (SCR-Katalysator) sowie einen Partikelfilter zur Abscheidung von Rußpartikeln und gegebenenfalls weitere Katalysatoren aufweisen. Um die hohen Anforderungen an minimale Stickoxidemissionen zu erfüllen, sind Abgasnachbehandlungssysteme bekannt, welche zwei in Reihe geschaltete SCR-Katalysatoren aufweisen, wobei mindestens dem stromaufwärts angeordneten SCR-Katalysator oder jeweils beiden SCR-Katalysatoren ein Dosierelement zur Eindosierung eines Reduktionsmittels vorgeschaltet ist. Als Reduktionsmittel wird dabei bevorzugt eine synthetische, wässrige Harnstofflösung verwendet, die in einer dem SCR-Katalysator vorgeschalteten Mischeinrichtung mit dem heißen Abgasstrom vermischt wird. Die Wärme des Abgases sorgt dabei für Verdampfung der Lösung sowie Thermolyse und Hydrolyse des Harnstoffs zu Ammoniak, der auf diese Weise in den Abgaskanal freigesetzt wird. Eine handelsübliche, wässrige Harnstofflösung setzt sich im Allgemeinen aus 32,5 % Harnstoff und 67,5 % Wasser zusammen.

Bei Einsatz von SCR-Katalysatoren muss zudem beachtet werden, dass die Aufbereitung des Reduktionsmittels sowie das Speicherverhalten des SCR-Katalysators bezüglich Ammoniak temperaturabhängig ist. Die Aufbereitung des Reduktionsmittels, die Ammoniak-Einspeicherung sowie die Konvertierung der Stickoxide mittels selektiver, katalytischer Reduktion haben jeweils optimale Temperaturbereiche, in welchen sie ihre maximale Effizienz erreichen. Bei höheren Abgastemperaturen kann der im SCR-Katalysator eingespeicherte Ammoniak thermisch desorbieren. Dies kann neben ungewollten Ammoniak-Emissionen bei Einsatz eines Ammoniak-Sperrkatalysators auch zur Erhöhung der Stickoxid-Emissionen sowie von Lachgasemissionen führen.

Die aktuellen SCR-Systeme sind aufgrund der höheren Wirkungsgrade des Verbrennungsmotors und der damit abnehmenden Abgastemperatur dahingehend optimiert, bei geringer Abgasleistung und möglichst zeitnah nach einem Kaltstart des Verbrennungsmotors eine hinreichende Konvertierung von Stickoxiden zu ermöglichen.

Bei hohen Leistungsanforderungen an den Verbrennungsmotor nimmt das Abgasvolumen und die Temperatur der SCR-Katalysatoren zu. Parallel sinkt die Speicherfähigkeit der SCR-Katalysatoren bezüglich Ammoniak, so dass für die selektive, katalytische Reaktion von Stickoxiden die Konvertierungsleistung reduziert ist. Ferner ist die mögliche Konvertierungsleistung abhängig vom Ammoniak-Füllstand des SCR-Katalysator. Je näher die eingespeicherte Ammoniakmenge an der für die vorliegende Temperatur maximalen Ammoniakbeladung liegt, desto höher ist der Umsatz an Stickoxiden. Um auch im unteren Temperaturbereich eine möglichst gute Konvertierung zu erreichen, ist daher ein möglichst hoher Füllstand beziehungsweise eine möglichst hohe Ammoniakbeladung angestrebt. Mit steigendem Füllstand wächst jedoch die Gefahr, dass das eingespeicherte Ammoniak bei steigenden Abgastemperaturen thermisch desorbiert.

Aus US 2011/265 451 A1 ist ein Abgasnachbehandlungssystem für einen Verbrennungsmotor mit zwei nacheinander geschalteten Katalysatoren bekannt. Dabei weist der erste Katalysator einen ersten Ausgang auf, über welche der Abgasstrom ungekühlt dem zweiten Katalysator zugeführt werden kann und einen zweiten Ausgang, über welchen der Abgasstrom gekühlt wird, bevor er dem zweiten Katalysator zugeführt wird.

Aus US 2016/279 572 A1 ist ein Abgasnachbehandlungssystem für einen Verbrennungsmotor mit einem ersten und einem dem ersten Katalysator nachgeschalteten zweiten Katalysator bekannt. Dabei umfasst der erste Katalysator einen Wärmetauscher für ein Abgaswärmerückgewinnungssystem, mit welchem dem Abgasstrom vor Eintritt in den zweiten

Katalysator Enthalpie entzogen und auf ein Arbeitsmedium im Abgaswärmerückgewinnungssystem übertragen werden kann.

DE 10 2016 215 207 A1 offenbart ein Abgasnachbehandlungssystem für einen Verbrennungsmotor mit einem motornahen ersten SCR-Katalysator und einem stromabwärts des motornahen ersten SCR-Katalysator angeordneten zweiten SCR-Katalysator, wobei jeweils stromaufwärts des jeweiligen SCR-Katalysators ein Dosiermodul zur Eindosierung eines Reduktionsmittels angeordnet ist.

Die WO 2017 / 153 665 A1 offenbart ein Abgasnachbehandlungssystem für einen Verbrennungsmotor sowie ein Verfahren zur Optimierung des Reduktionsmittelverbrauches bei einem Abgasnachbehandlungssystem mit zwei in Reihe geschalteten SCR-Katalysatoren, welchen jeweils ein Dosierventil zur Eindosierung von wässriger Harnstofflösung vorgeschaltet ist.

Aus der US 2014 / 230 408 A1 ist ein Verbrennungsmotor mit einem Abgasnachbehandlungssystem bekannt, welches zwei SCR-Katalysatoren sowie eine Abgaswärmerückgewinnungseinheit umfasst. Dabei ist in der Abgaswärmerückgewinnungseinheit ein Stickoxidspeicherkatalysator vorgesehen, welcher über eine schaltbare Abgasklappe in den Abgasstrom des Verbrennungsmotors ein- und ausgekoppelt werden kann.

Die DE 10 2011 053 742 A1 offenbart einen Wärmetauscher für eine Dosiereinheit einer SCR-Abgasnachbehandlungseinrichtung, wobei durch die Dosiereinrichtung eine einstellbare Menge eines Fluides in einen Abgasstrang eines Verbrennungsmotors eindosierbar ist. Der Wärmetauscher weist zumindest einen luftdurchströmbaren Fluidkanal auf, der zumindest um einen Teilbereich einer Außenumfangswandung eines Dosierventils der Dosiereinheit geführt ist.

Ferner ist aus der US 5 753 188 A ein Verbrennungsmotor mit einem Abgasnachbehandlungssystem mit mindestens einer Abgasnachbehandlungskomponente bekannt, wobei zur Kühlung der Abgasnachbehandlungskomponente Frischluft in die Abgasanlage eingeblasen wird.

Der Erfindung liegt nun die Aufgabe zugrunde, das Abgasnachbehandlungssystem derart weiterzubilden, dass der Betriebsbereich, in welchem eine effiziente Konvertierung von Stickoxiden möglich ist, vergrößert wird und somit die Emissionen des Verbrennungsmotors minimiert werden.

Erfindungsgemäß wird diese Aufgabe durch ein Abgasnachbehandlungssystem für einen Verbrennungsmotor, umfassend eine Abgasanlage mit einem Abgaskanal, in welchem in Strömungsrichtung eines Abgases des Verbrennungsmotors ein motornaher erster SCR-Katalysator und ein stromabwärts des ersten SCR-Katalysators ein zweiter SCR-Katalysator angeordnet sind. Dabei ist stromaufwärts des ersten SCR-Katalysators ein erstes Dosierelement zur Eindosierung eines Reduktionsmittels in den Abgaskanal vorgesehen. Stromabwärts des ersten SCR-Katalysators und stromaufwärts des zweiten SCR-Katalysators ist ein zweites Dosierelement zur Eindosierung eines Reduktionsmittels angeordnet. Es ist vorgesehen, dass stromabwärts des ersten SCR-Katalysators und stromaufwärts des zweiten SCR-Katalysators Mittel zur Absenkung der Abgastemperatur vorgesehen sind, mit welchen die Abgastemperatur des Verbrennungsmotors vor Eintritt in den zweiten SCR-Katalysator abgesenkt werden kann. Durch ein erfindungsgemäßes Abgasnachbehandlungssystem kann die Konvertierungsleistung bezüglich der Stickoxidemissionen gesteigert werden. Dabei kann ein hoher Ammoniak-Füllstand auf den SCR-Katalysatoren eingestellt werden, ohne dass dieser hohe Ammoniak zu einer thermischen Desorption von Ammoniak und damit verbundenen Sekundäremissionen führt. Der mögliche Ammoniak-Füllstand des zweiten SCR-Katalysators ist abhängig von der Temperatur. Bis etwa 250 °C können hohe Mengen an Ammoniak auf dem SCR-Katalysator gespeichert werden und für die Reduktion der NOₓ-Emissionen bereitgestellt werden. Mit steigender Temperatur nimmt die Ammoniak-Speicherfähigkeit des SCR-Katalysators stark ab. Diese gilt sowohl für den motornahen ersten SCR-Katalysator als auch für zweiten SCR-Katalysator, welcher vorzugsweise in einer Unterbodenlage eines Kraftfahrzeuges angeordnet ist.

Durch die in den abhängigen Ansprüchen aufgeführten Merkmale sind vorteilhafte Verbesserungen und nicht-triviale Weiterentwicklungen des im unabhängigen Anspruch genannten Abgasnachbehandlungssystems möglich.

Erfindungsgemäß ist vorgesehen, dass die Mittel zur Absenkung der Abgastemperatur einen Wärmetauscher, insbesondere einen Wärmetauscher eines Abgaswärmerückgewinnungssystems umfassen. Durch einen Wärmetauscher ist ein einfache Konditionierung des Abgasstroms vor Eintritt in den zweiten SCR-Katalysator möglich. Dabei weist ein Wärmetauscher im Vergleich zu anderen Mitteln zur Absenkung der Abgastemperatur eine hohe Kühlleistung für den Abgasstrom auf. Dabei wird die Wärme des Abgasstroms auf ein Trägermedium des Abgaswärmerückgewinnungssystems oder ein Kühlmittel eines Kühlkreislaufs übertragen. Durch die Konditionierung des Abgasstroms ist eine höhere Ammoniak-Beladung des zweiten SCR-Katalysators möglich, ohne die Gefahr einer thermischen Desorption bei einer erhöhten Leistungsanforderung an den Verbrennungsmotor.

Erfindungsgemäß ist vorgesehen, dass der Wärmetauscher einen Hauptkanal und einen Bypass für den Abgasstrom des Verbrennungsmotors aufweist. Durch einen Wärmetauscher mit einem Hauptkanal und einem Bypass kann die Kühlleistung des Wärmetauschers auf einfache Art und Weise angepasst werden. Dabei ist es bei kaltem Abgasstrom insbesondere auch möglich, den Abgasstrom im Wesentlichen ungekühlt zum zweiten SCR-Katalysator weiterzuleiten und ein Auskühlen des zweiten SCR-Katalysators unter seine minimale Betriebstemperatur zu verhindern. Somit kann die Konvertierungsleistung bezüglich Stickoxidemissionen weiter gesteigert werden und der Betriebsbereich, in welchem eine effiziente Konvertierung von Stickoxiden möglich ist, erweitert werden.

Besonders bevorzugt ist dabei, wenn an dem Wärmetauscher ein Steuerelement, insbesondere eine schaltbare Abgasklappe vorgesehen ist, mit welchem der Abgasstrom des Verbrennungsmotors wahlweise durch den Hauptkanal oder durch den Bypass geleitet werden kann. Durch ein Steuerelement, insbesondere eine Abgasklappe ist eine einfache Aufteilung des Abgasstroms auf den Hauptkanal und den Bypass möglich. Dadurch kann die Kühlleistung des Wärmetauschers auf einfache Art und Weise geregelt werden, was die Konditionierung des Abgasstroms vor Eintritt in den zweiten SCR-Katalysator erleichtert.

Erfindungsgemäß ist vorgesehen, dass der Wärmetauscher als Spiralwärmetauscher ausgeführt ist, wobei die Spiralen durch den Bypass verlaufen. Dadurch kann auf einfache Art und Weise zwischen einem vollständig gekühlten Abgasstrom, einem teilweise gekühlten Abgasstrom und einem ungekühlten Abgasstrom umgeschaltet werden. Durch ein Schließen des Stellelements kann der Abgasstrom vollständig durch den Bypass geleitet werden, wo der Abgasstrom durch das Kühlmittel in den Spiralen des Spiralwärmetauschers gekühlt wird. Somit kann eine hohe Kühlleistung erzielt werden.

In einer bevorzugten Ausführungsform des Abgasnachbehandlungssystems ist vorgesehen, dass stromabwärts des zweiten Dosierelements und stromaufwärts des Wärmetauschers oder einlassseitig am Wärmetauscher ein weiterer SCR-Katalysator angeordnet ist. Durch den weiteren SCR-Katalysator kann die Hydrolyse, Gemischaufbereitung und Gleichverteilung des Reduktionsmittels zur selektiven, katalytischen Reduktion von Stickoxiden verbessert werden.

In weiterer bevorzugter Ausgestaltung der Erfindung ist vorgesehen, dass die Mittel zur Absenkung der Abgastemperatur ein Sekundärluftsystem oder einen Abgasbrenner mit einem Sekundärluftanschluss umfassen. Durch das Einblasen von Sekundärluft kann die Abgastemperatur ebenfalls abgesenkt und der Abgasstrom vor Eintritt in einen der SCR-Katalysatoren, insbesondere vor Eintritt in den zweiten SCR-Katalysator, konditioniert werden. Somit kann ebenfalls verhindert werden, dass das im SCR-Katalysator aufgrund steigender Lastanforderungen an den Verbrennungsmotor und damit verbundenen steigenden Abgastemperaturen thermisch desorbiert.

In einer bevorzugten Ausgestaltung des Abgasnachbehandlungssystems weist der Abgaskanal stromabwärts des ersten SCR-Katalysators und stromaufwärts des zweiten Dosierelements eine Verzweigung auf, an welcher eine Niederdruck-Abgasrückführung aus dem Abgaskanal abzweigt, wobei die Mittel zur Absenkung der Abgastemperatur stromabwärts der Verzweigung angeordnet sind. Dadurch kann das Abgasvolumen, welches konditioniert werden muss, reduziert werden, da der Abgasstrom um das über die Niederdruck-Abgasrückführung zurückgeführte Abgasvolumen reduziert ist. Zudem kann der Abgasstrom unmittelbar vor Eintritt in den zweiten SCR-Katalysator konditioniert werden, wodurch die Regelung vereinfacht wird.

Besonders bevorzugt ist dabei, wenn eine Einleitstelle für ein Sekundärluftsystem oder für einen Abgasbrenner stromabwärts der Verzweigung für die Niederdruck-Abgasrückführung liegt. Durch den um die Niederdruck-Abgasrückführungsmenge reduzierten Volumenstrom kann die zur Kühlung des Abgasstroms notwendige Sekundärluftmenge reduziert werden. Somit kann auch die Antriebsleistung für die Sekundärluftpumpe reduziert werden, wodurch die Effizienz des Verbrennungsmotors gesteigert werden kann.

In einer weiteren Verbesserung der Erfindung ist vorgesehen, dass stromabwärts des zweiten SCR-Katalysators ein Ammoniak-Sperrkatalysator angeordnet ist. Durch einen Ammoniak-Sperrkatalysator kann die Freisetzung von Ammoniak verhindert werden. Somit kann selbst bei einer unerwünschten thermischen Desorption des im zweiten SCR-Katalysator eingespeicherten Ammoniaks verhindert werden, dass dieser an die Umwelt emittiert wird.

Erfindungsgemäß wird ein Verfahren zur Abgasnachbehandlung eines Verbrennungsmotors mit einem solchen Abgasnachbehandlungssystem vorgeschlagen, wobei der Abgasstrom durch die Mittel zur Absenkung der Abgastemperatur derart konditioniert wird, dass eine thermische Desorption des im zweiten SCR-Katalysators eingelagerten Ammoniaks vermieden wird. Dadurch ist eine höhere Ammoniak-Beladung des zweiten SCR-Katalysators möglich. Auf diese Weise kann die Konvertierungsleistung des zweiten SCR-Katalysators gesteigert werden, da trotz höherer Ammoniak-Beladung keine Gefahr einer thermische Desorption des im zweiten SCR-Katalysator eingelagerten Ammoniaks besteht. Durch die höhere Ammoniak-Beladung wird die Konvertierungsleistung signifikant verbessert, wodurch die Stickoxidemissionen minimiert werden können.

In einer bevorzugten Ausführungsform des Verfahrens zur Abgasnachbehandlung ist vorgesehen, dass ein Ammoniak-Füllstand des zweiten SCR-Katalysators ermittelt wird und der Abgasstrom des Verbrennungsmotors bei einem Anstieg der Abgastemperatur zumindest so lange gekühlt wird, bis die Abgastemperatur wieder unter eine zum aktuellen Füllstand des zweiten SCR-Katalysators gehörige Desorptionstemperatur gesunken ist. Durch eine Ermittlung des Ammoniak-Füllstands kann die Kühlleistung der Mittel zur Reduzierung der Abgastemperatur, insbesondere des Wärmetauschers derart angepasst werden, dass der zweite SCR-Katalysator über weite Betriebsbereiche des Verbrennungsmotors in einem zur Konvertierung von Stickoxiden idealen Temperaturbereich betrieben werden kann. Somit können die Konvertierungsleistung verbessert und die Stickoxidemissionen minimiert werden.

In einer bevorzugten Ausgestaltung des Verfahrens zur Abgasnachbehandlung ist vorgesehen, dass der zweite SCR-Katalysator auf eine Temperatur von 200 °C bis 350 °C, vorzugsweise von 250 °C bis 300 °C konditioniert wird. In diesem Temperaturbereich kann eine maximaleffiziente Konvertierung von Stickoxiden gewährleistet werden.

Bei der Verwendung eines Abgasbrenners als Mittel zur Absenkung der Abgastemperatur ist vorgesehen, dass der Abgasbrenner zur Absenkung der Abgastemperatur ausschließlich im ungefeuerten Betrieb betrieben wird und Sekundärluft in die Abgasanlage fördert. Durch die Sekundärluft wird der Abgasstrom vor Eintritt in einen der SCR-Katalysatoren abgekühlt, sodass die Gefahr eine thermischen Desorption von in dem jeweiligen SCR-Katalysator eingespeicherten Ammoniak verringert wird.

Die verschiedenen in dieser Anmeldung genannten Ausführungsformen der Erfindung sind, sofern im Einzelfall nicht anders ausgeführt, mit Vorteil miteinander kombinierbar.

Die Erfindung wird nachfolgend in Ausführungsbeispielen anhand der zugehörigen Zeichnungen erläutert. Gleiche Bauteile oder Bauteile mit gleicher Funktion sind in den Zeichnungen mit gleichen Bezugsziffern versehen. Es zeigen:
- Figur 1: ein bevorzugtes Ausführungsbeispiel eines Verbrennungsmotors mit einem erfindungsgemäßen Abgasnachbehandlungssystem;
- Figur 2: ein alternatives Ausführungsbeispiel eines erfindungsgemäßen Abgasnachbehandlungssystems;
- Figur 3: ein weiteres alternatives Ausführungsbeispiel eines erfindungsgemäßen Abgasnachbehandlungssystems; und
- Figur 4: eine Variation des alternatives Ausführungsbeispiel eines erfindungsgemäßen Abgasnachbehandlungssystems, wobei die Sekundärluft stromaufwärts des ersten SCR-Katalysators in die Abgasanlage eingeleitet wird.

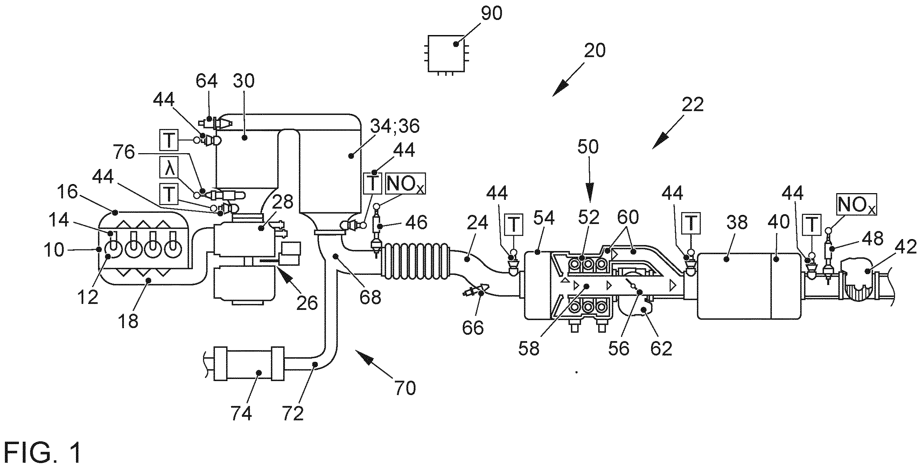

Figur 1 zeigt einen Verbrennungsmotor 10 mit einer Mehrzahl von Brennräumen 12. In Figur 1 ist beispielhaft ein Verbrennungsmotor 10 mit vier Brennräumen 12 dargestellt. Prinzipiell sind Verbrennungsmotoren 10 mit einer anderen Anzahl an Brennräumen 12 möglich. Der Verbrennungsmotor 10 ist vorzugsweise als direkteinspritzender Dieselmotor ausgeführt. An den Brennräumen 12 ist jeweils ein Kraftstoffinjektor 14 zum Einspritzen eines brennbaren Kraftstoffs in den jeweiligen Brennraum 12 angeordnet. Der Verbrennungsmotor 10 ist mit seinem Auslass 18 mit einer Abgasanlage 22 eines Abgasnachbehandlungssystems 20 verbunden, welche einen Abgaskanal 24 umfasst. In Strömungsrichtung eines Abgases des Verbrennungsmotors 10 durch den Abgaskanal 24 ist stromabwärts einer Turbine 28 eines Abgasturboladers 26 als erste Komponente der Abgasnachbehandlung ein Oxidationskatalysator 30 oder ein NOₓ-Speicherkatalysator 32 angeordnet. Stromabwärts des Oxidationskatalysators 30 oder des NOₓ-Speicherkatalysators 32 ist ein vorzugsweise motornaher Partikelfilter 34 mit einer Beschichtung 36 zur selektiven, katalytischen Reduktion von Stickoxiden angeordnet. Stromabwärts des Partikelfilters 34 ist, vorzugsweise in einer Unterbodenposition eines Kraftfahrzeuges, ein weiterer SCR-Katalysator 38 angeordnet. Der zweite SCR-Katalysator 38 umfasst einen Ammoniak-Sperrkatalysator 40, welcher auslassseitig in den zweiten SCR-Katalysator 38 integriert ist. Die Turbine 28 des Abgasturboladers 26 treibt einen nicht dargestellten Verdichter in einem Ansaugtrakt des Verbrennungsmotors 10 an, um die den Brennräumen 12 zugeführte Frischluftmenge zu erhöhen. Dazu ist der Ansaugtrakt mit einem Einlass 16 des Verbrennungsmotors 10 verbunden.

Stromabwärts des Oxidationskatalysators 30 oder des NOₓ-Speicherkatalysators 32 und stromaufwärts des Partikelfilters 34 ist im Abgaskanal 24 ein erstes Dosierelement 64 angeordnet, mit welchem ein Reduktionsmittel, insbesondere wässrige Harnstofflösung, in den Abgaskanal 24 stromaufwärts des Partikelfilters 34 eindosiert werden kann. Stromabwärts des Partikelfilters 34 und stromaufwärts des zweiten SCR-Katalysators 38 ist eine Verzweigung 68 vorgesehen, an welcher ein Abgasrückführungskanal 72 einer Niederdruck-Abgasrückführung 70 aus dem Abgaskanal 24 abzweigt.

Stromabwärts des Ammoniak-Sperrkatalysators 40 ist im Abgaskanal 24 eine Abgasklappe 42 angeordnet, mit welcher der Abgasgegendruck im Abgaskanal 24 erhöht und somit der über die Niederdruck-Abgasrückführung 70 zurückgeführte Abgasstrom gesteuert werden kann. Dieser über die Niederdruck-Abgasrückführung 70 zurückgeführte Abgasstrom kann durch einen Abgasrückführungskühler 74 abgekühlt werden. Ferner ist stromabwärts der Verzweigung 68 und stromaufwärts des zweiten SCR-Katalysators 38 ein zweites Dosierelement 66 vorgesehen, mit welchem das Reduktionsmittel stromaufwärts des zweiten SCR-Katalysators 38 in den Abgaskanal 24 eindosiert werden kann. Die Dosierelemente 64, 66 sind über Reduktionsmittelleitungen mit einem Vorratsbehälter verbunden, in welchem das Reduktionsmittel bevorratet ist.

Stromabwärts des zweiten Dosierelements 66 und stromaufwärts des zweiten SCR-Katalysator 38 ist ein Wärmetauscher 52 eines Abgaswärmerückgewinnungssystems 50 angeordnet, mit welchem ein Teil der über den Abgasstrom abgeführten Abwärme nutzbar gemacht werden kann. Das Abgaswärmerückgewinnungssystem 50 umfasst in bekannter Weise ein Förderelement, insbesondere eine Pumpe, eine Expansionskraftmaschine und einen Kondensator sowie den Wärmetauscher 52, welcher als Verdampfer für ein Betriebsfluid des Abgaswärmerückgewinnungssystems 50 dient. Der Wärmetauscher 52 ist vorzugsweise als Spiralwärmetauscher ausgeführt und weist einen zentrischen Hauptkanal 58 und einen Bypass 60 auf. Dabei ist in dem Hauptkanal 58 ein Stellelement 56, insbesondere eine Abgasklappe angeordnet, welche über einen schaltbaren Aktor 62 verstellt werden kann. Dabei verlaufen die Spiralen, in denen das Betriebsfluid für das Abgaswärmerückgewinnungssystem 50 aufgeheizt wird, vorzugsweise ausschließlich durch den Bypass 60. Der Wärmetauscher 52 trägt einlassseitig eine SCR-Scheibe 54. Die SCR-Scheibe 54 unterstützt dabei die Hydrolyse des eindosierten Reduktionsmittels.

An dem Abgaskanal 24 können ein oder mehrere Temperatursensor(en) 44 angeordnet sein, mit welchem eine Abgastemperatur T_{EG} an mehreren Positionen im Abgaskanal 24 gemessen werden kann. Ferner ist stromabwärts der Verzweigung 68 und stromaufwärts des zweiten SCR-Katalysators 38, insbesondere stromaufwärts des Wärmetauschers 52 ein erster NOₓ-Sensor 46 vorgesehen, mit welchem die Stickoxidkonzentration im Abgaskanal 24 gemessen werden kann. Stromabwärts des Ammoniak-Sperrkatalysators 40 ist ein zweiter NOₓ-Sensor 48 vorgesehen, welcher zur On-Board-Diagnose des Abgasnachbehandlungssystems 48, insbesondere des zweiten SCR-Katalysators 38 genutzt werden kann. Ferner kann im Abgaskanal 24 eine Lambdasonde 76 angeordnet sein.

Bei einem Kaltstart des Verbrennungsmotors 10 beziehungsweise nach einem Motorstart mit kalter Abgasanlage 22 erfolgt die Konvertierung der Stickoxide primär durch das erste Dosierelement 64 und den Partikelfilter 34 mit der SCR-Beschichtung 36. Aufgrund der motornahen Anordnung ist dieser erste SCR-Katalysator 34, 36 wesentlich schneller betriebsbereit als der zweite SCR-Katalysator 38 in Unterbodenlage.

Mit steigender Temperatur des zweiten SCR-Katalysators 38 in Unterbodenlage wird die Dosierung des Reduktionsmittels von dem ersten Dosierelement 64 auf das zweite Dosierelement 66 umgeschaltet. Die Eindosierung des Reduktionsmittels stromabwärts der Verzweigung 68 hat dabei den Vorteil, dass die Dosiermenge geringer ist, da der Abgasstrom um das über die Niederdruck-Abgasrückführung 70 zurückgeführte Abgasvolumen verringert ist. Ferner geht kein Reduktionsmittel über die Niederdruck-Abgasrückführung 70 verloren.

Die Eindosierung des Reduktionsmittel erfolgt in den Abgaskanal 24 stromaufwärts des Wärmetauschers 32. Dabei unterstützt die SCR-Scheibe 54 am Eingang des Wärmetauschers 52 die Hydrolyse, Gemischaufbereitung und Gleichverteilung des Reduktionsmittels. Der zweite SCR-Katalysator 38 stromabwärts des Wärmetauschers ist für eine optimale Ammoniak-Speicherung und Stickoxidkonvertierung entsprechend groß ausgelegt.

Der Wärmetauscher 32 wird mit einem Kühlmittel durchströmt. Die Wärmetauscherleistung durch das Kühlmittel kann hierbei von einem Aktor, insbesondere von einer Pumpe oder einem Ventil, eingestellt und geregelt werden.

Der Wärmetauscher 32 ist derart ausgeführt, dass über den Aktor 62 das Stellelement 56 verstellt werden kann. Somit kann der Anteil des Abgasmassenstroms, welcher über die Kühlröhren des Wärmetauschers geleitet wird, eingestellt werden. Ist das Stellelement 56 geöffnet, so strömt nahezu der komplette Abgasstrom durch den zentrischen Hauptkanal 58 und wird dem zweiten SCR-Katalysator 38 im Wesentlichen ungekühlt zugeführt. Durch Anschließen des Stellelements 56 kann entweder ein Teilstrom oder der komplette Abgasstrom über die Kühlröhren des Wärmetauschers 32 geführt werden und über den Bypass 60 gekühlt dem zweiten SCR-Katalysator 38 zugeführt werden.

Über den Wärmetauscher 52 kann die Abgastemperatur vor dem zweiten SCR-Katalysator 38 auf eine optimale Zieltemperatur sowie die sich daraus einstellende optimale Bauteiltemperatur des zweiten SCR-Katalysators 38 eingeregelt werden. Die Abgastemperatur ergibt sich dabei entweder aus der Mischtemperatur des mittig strömenden Abgases und dem gekühlten Abgas des Bypasses oder aus einem vollständigen Bypassbetrieb.

Das Konvertierungsverhalten beziehungsweise die maximal möglich Konvertierungsrate ist abhängig von der Temperatur des SCR-Katalysators 34, 36, 38 sowie von der eingespeicherten Ammoniakmenge. Bei hohen Ammoniakbeladungen können entsprechend hohe Konvertierungsraten erreicht werden. Über den kompletten Temperaturbereich ist die Konvertierung deutlich schlechter, wenn der Ammoniakspeicher weniger stark gefüllt ist. Mit abnehmender Temperatur kann deutlich mehr Ammoniak im SCR-Katalysator 34, 36, 38 eingespeichert werden. Mit zunehmender Temperatur nimmt das Speichervermögen des SCR-Katalysators 34, 36, 38 deutlich ab.

Dabei können auch im niedrigen Temperaturbereich hohe Konvertierungsleistungen erreicht werden, wenn der Ammoniakspeicher ausreichend stark gefüllt ist. Ein voller AmmoniakSpeicher birgt jedoch die Gefahr, dass aufgrund der Abgasdynamik mit steigender Temperatur, beispielsweise durch einen Beschleunigungsvorgang oder eine dauerhaft höhere Lastanforderung an den Verbrennungsmotor 10 das eingespeicherte Ammoniak thermisch desorbiert. Dieser Effekt der thermischen Desorption kann durch den Wärmetauscher 52 stromaufwärts des zweiten SCR-Katalysators 38 im Wesentlichen vermieden werden.

Die Regelung der Kühlung des Abgasstrom hat dabei folgenden Zweck: Mit der Regelung der Abgastemperatur kann gleichzeitig auch die Bauteiltemperatur des zweiten SCR-Katalysators 38 geregelt werden. Die Temperatur des zweiten SCR-Katalysators 38 kann somit jeweils dem Ammoniak-Füllstand des zweiten SCR-Katalysators 38 angepasst werden. Durch die Möglichkeit, den Abgasstrom entsprechend zu konditionieren, kann die Gefahr der thermischen Desorption ausgeschlossen werden. Bei der Applikation und Dosierung des Reduktionsmittels kann jetzt auf einen maximalen Ammoniak-Füllstand des zweiten SCR-Katalysators 38 geregelt werden.

Steigt die Abgastemperatur aufgrund eines höherlastigen Betriebspunkts des Verbrennungsmotors 10, wird der Abgasstrom so lange gekühlt, bis der Ammoniak-Füllstand des zweiten SCR-Katalysators 38 soweit abgebaut ist, dass die höhere Temperatur zugelassen werden kann. Alternativ wird so lange gekühlt, bis die Abgastemperatur durch einen niedrigeren Lastpunkt wieder unter die zum aktuellen Füllstand gehörende Desorptionstemperatur gesunken ist.

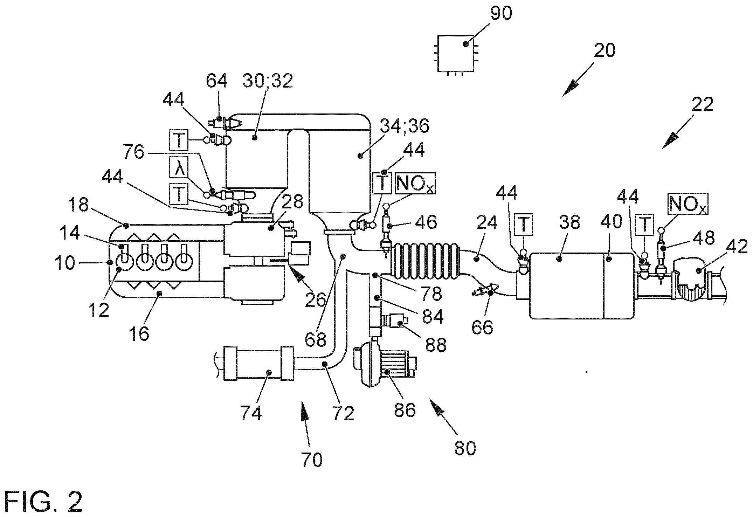

In Figur 2 ist ein alternatives Ausführungsbeispiel eines erfindungsgemäßen Abgasnachbehandlungssystems dargestellt. Bei im Wesentlichen gleichem Aufbau wie zu Fig. 1 ausgeführt ist anstelle eines Wärmetauschers 52 ein Sekundärluftsystem 80 vorgesehen, um an einer Einleitstelle 78 kalte Sekundärluft in den Abgaskanal 24 einzubringen und somit die Abgastemperatur T_{EG} vor Eintritt in den zweiten SCR-Katalysator 38 abzusenken. Auf diese Weise kann ebenfalls eine höhere Ammoniak-Beladung des zweiten SCR-Katalysators 38 erreicht werden, da durch das Einblasen von Sekundärluft ebenfalls verhindert werden kann, dass sich der zweite SCR-Katalysator 38 erwärmt und es zu einer thermischen Desorption von Ammoniak kommt. Dabei umfasst das Sekundärluftsystem 80 eine Sekundärluftpumpe 86 und eine Sekundärluftleitung 84, welche die Sekundärluftpumpe 86 mit der Einleitstelle 78 am Abgaskanal 24 verbindet. In der Sekundärluftleitung 84 ist ein Sekundärluftventil 88 angeordnet, um die dem Abgaskanal 24 zugeführte Sekundärluftmenge zu steuern.

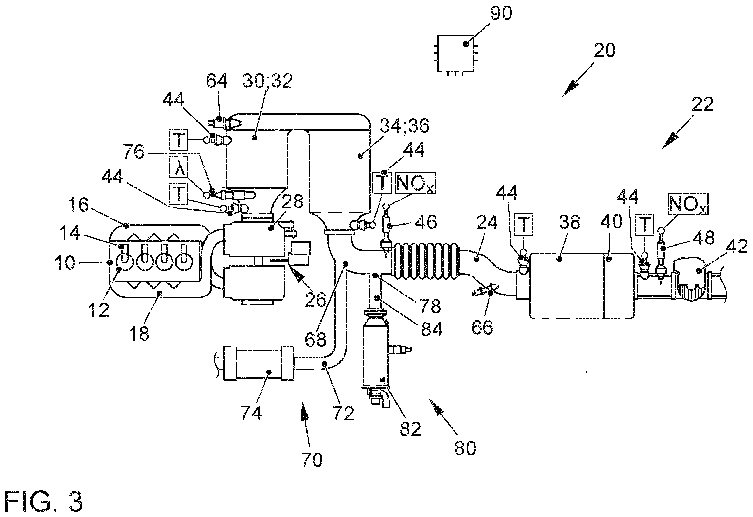

In Figur 3 ist ein weiteres Ausführungsbeispiel eines erfindungsgemäßen Abgasnachbehandlungssystem 20 dargestellt. Bei im Wesentlichen gleichem Aufbau wie zu Figur 2 ausgeführt, erfolgt in diesem Ausführungsbeispiel die Sekundärluftzufuhr durch einen Abgasbrenner 82 mit Sekundärluftsystem 80. Dabei wird der Abgasbrenner 82 in einem ungefeuerten Betrieb betrieben und fördert lediglich kalte Sekundärluft in den Abgaskanal 24, um die Abgastemperatur T_{EG} vor Eintritt in den zweiten SCR-Katalysator 38 abzusenken. Zusätzlich kann der Abgasbrenner 82 in eine Kaltstartphase des Verbrennungsmotors 10 genutzt werden, um den zweiten SCR-Katalysator 38 auf eine zur Konvertierung von Stickoxiden notwendige Betriebstemperatur aufzuheizen.

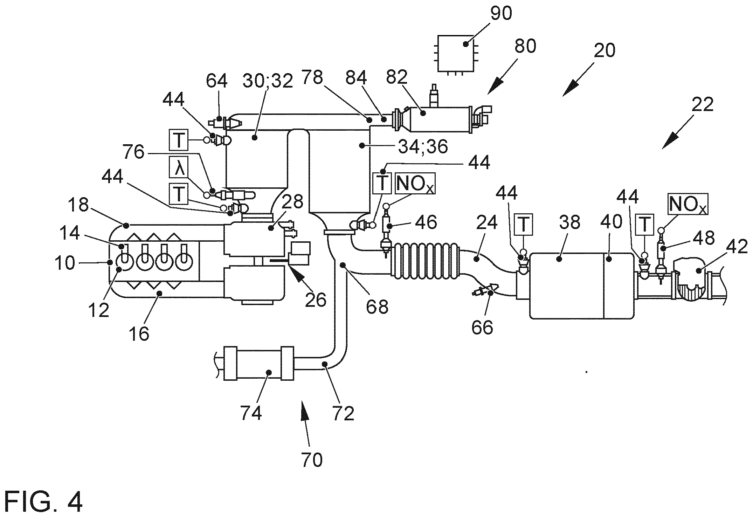

In Figur 4 ist ein weiteres alternatives Ausführungsbeispiel eines erfindungsgemäßen Abgasnachbehandlungssystems 20 dargestellt. Bei im Wesentlichen gleichem Aufbau wie zu Figur 3 ausgeführt, liegt die Einleitstelle 78 für den Abgasbrenner 82 mit Sekundärluftsystem 80 in diesem Ausführungsbeispiel stromabwärts des Oxidationskatalysators 30 oder des NOₓ-Speicherkatalysators 32 und stromaufwärts des motornahen Partikelfilters 34 mit SCR-Beschichtung. In dieser Ausführungsform kann der Abgasbrenner 82 zusätzlich genutzt werden, um eine Regeneration des Partikelfilters 34 einzuleiten und den Partikelfilter 34 auf seine Regenerationstemperatur aufzuheizen.

### Bezugszeichenliste

- 10: Verbrennungsmotor
- 12: Brennraum
- 14: Kraftstoffinjektor
- 16: Einlass
- 18: Auslass
- 20: Abgasnachbehandlungssystem
- 22: Abgasanlage
- 24: Abgaskanal
- 26: Abgasturbolader
- 28: Turbine
- 30: Oxidationskatalysator
- 32: NOₓ-Speicherkatalysator
- 34: Partikelfilter
- 36: Beschichtung zur selektiven, katalytischen Reduktion von Stickoxiden
- 38: SCR-Katalysator
- 40: Ammoniak-Sperrkatalysator
- 42: Abgasklappe
- 44: Temperatursensor
- 46: erster NOₓ-Sensor
- 48: zweiter NOₓ-Sensor
- 50: Abgaswärmerückgewinnungseinrichtung
- 52: Wärmetauscher
- 54: SCR-Scheibe
- 56: Steuerelement / Abgasklappe
- 58: Hauptkanal
- 60: Bypass
- 62: Aktor
- 64: erstes Dosierelement
- 66: zweites Dosierelement
- 68: Verzweigung
- 70: Niederdruck-Abgasrückführung
- 72: Abgasrückführungsleitung
- 74: Abgasrückführungskühler
- 76: Lambdasonde
- 78: Einleitstelle
- 80: Sekundärluftsystem
- 82: Abgasbrenner
- 84: Sekundärluftleitung
- 86: Sekundärluftpumpe
- 88: Sekundärluftventil
- 90: Steuergerät

## Patentansprüche

1. Abgasnachbehandlungssystem (20) für einen Verbrennungsmotor (10), umfassend eine Abgasanlage (22) mit einem Abgaskanal (24), in welchem in Strömungsrichtung eines Abgases des Verbrennungsmotors (10) ein motornaher erster SCR-Katalysator (34, 36) und stromabwärts des ersten SCR-Katalysators (34, 36) ein zweiter SCR-Katalysator (38) angeordnet sind, wobei stromaufwärts des ersten SCR-Katalysators (34, 36) ein erstes Dosierelement (64) zur Eindosierung eines Reduktionsmittels in den Abgaskanal (24) vorgesehen ist und wobei stromabwärts des ersten SCR-Katalysators (34, 36) und stromaufwärts des zweiten SCR-Katalysators (38) ein zweites Dosierelement (66) zur Eindosierung eines Reduktionsmittels angeordnet ist, wobei stromabwärts des ersten SCR-Katalysators (34, 36) und stromaufwärts des zweiten SCR-Katalysators (38) Mittel zur Absenkung der Abgastemperatur (50, 52, 80, 82) vorgesehen sind, mit welchen die Temperatur des Abgasstroms des Verbrennungsmotors (10) vor Eintritt in den zweiten SCR-Katalysator abgesenkt werden kann, wobei die Mittel zur Absenkung der Abgastemperatur (50, 52, 80, 82) einen Wärmetauscher (52) umfassen, **dadurch gekennzeichnet, dass** der Wärmetauscher (52) einen Hauptkanal (58) und einen Bypass (60) für den Abgasstrom des Verbrennungsmotors (10) aufweist, wobei der Wärmetauscher (52) als Spiralwärmetauscher ausgeführt ist, wobei die Spiralen durch den Bypass (60) verlaufen.

2. Abgasnachbehandlungssystem (20) nach Anspruch 1, **dadurch gekennzeichnet, dass** der Wärmetauscher (52) ein Wärmetauscher eines Abgaswärmerückgewinnungssystems (50) ist.

3. Abgasnachbehandlungssystem (20) nach Anspruch 1 oder 2, **dadurch gekennzeichnet, dass** am Wärmetauscher (52) ein Steuerelement (56) vorgesehen ist, mit welchem der Abgasstrom des Verbrennungsmotors (10) wahlweise durch den Hauptkanal (58) oder durch den Bypass (60) geleitet werden kann.

4. Abgasnachbehandlungssystem (20) nach einem der Ansprüche 1 bis 3, **dadurch gekennzeichnet, dass** stromabwärts des zweiten Dosierelements (66) und stromaufwärts des Wärmetauschers (52) oder einlassseitig am Wärmetauscher (52) ein weiterer SCR-Katalysator (54) angeordnet ist.

5. Abgasnachbehandlungssystem (20) nach Anspruch 1, **dadurch gekennzeichnet, dass** die Mittel zur Absenkung der Abgastemperatur (50, 52, 80, 82) ein Sekundärluftsystem (80) umfassen.

6. Abgasnachbehandlungssystem (20) nach Anspruch 1, **dadurch gekennzeichnet, dass** die Mittel zur Absenkung der Abgastemperatur (50, 52, 80, 82) einen Abgasbrenner (82) umfassen.

7. Abgasnachbehandlungssystem (20) nach einem der Ansprüche 1 bis 6, **dadurch gekennzeichnet, dass** der Abgaskanal (24) stromabwärts des ersten SCR-Katalysators (34, 36) und stromaufwärts des zweiten Dosierelements (66) eine Verzweigung (68) aufweist, an welcher eine Niederdruck-Abgasrückführung (70) aus dem Abgaskanal (24) abzweigt, wobei die Mittel zur Absenkung der Abgastemperatur (50, 52, 80, 82) stromabwärts der Verzweigung (68) angeordnet sind.

8. Abgasnachbehandlungssystem (20) nach Anspruch 7, **dadurch gekennzeichnet, dass** eine Einleitstelle (78) für ein Sekundärluftsystem (80) oder für einen Abgasbrenner (82) stromabwärts der Verzweigung (68) liegt.

9. Abgasnachbehandlungssystem (20) nach einem der Ansprüche 1 bis 8, **dadurch gekennzeichnet, dass** stromabwärts des zweiten SCR-Katalysators (38) ein Ammoniak-Sperrkatalysator (40) angeordnet ist.

10. Verfahren zur Abgasnachbehandlung eines Verbrennungsmotors (10) mit einem Abgasnachbehandlungssystem (20) nach einem der Ansprüche 1 bis 9, **dadurch gekennzeichnet, dass** der Abgasstrom durch die Mittel zur Absenkung der Abgastemperatur (50, 52, 80, 82) derart konditioniert wird, dass eine thermische Desorption des im zweiten SCR-Katalysators (38) eingelagerten Ammoniaks vermieden wird.

11. Verfahren zur Abgasnachbehandlung nach Anspruch 10, **dadurch gekennzeichnet, dass** ein Füllstand des zweiten SCR-Katalysators (38) mit Ammoniak ermittelt wird und der Abgasstrom des Verbrennungsmotors (10) bei einem Anstieg der Abgastemperatur (T_{EG}) zumindest so lange gekühlt wird, bis die Abgastemperatur (T_{EG}) wieder unter eine zum aktuellen Füllstand des zweiten SCR-Katalysators (38) gehörige Desorptionstemperatur (T_{D}) gesunken ist.

12. Verfahren zur Abgasnachbehandlung nach Anspruch 10 oder 11, **dadurch gekennzeichnet, dass** der zweite SCR-Katalysator (38) auf eine Temperatur von 200°C bis 300°C konditioniert wird.

13. Verfahren zur Abgasnachbehandlung nach einem der Ansprüche 10 bis 12, **dadurch gekennzeichnet, dass** ein Abgasbrenner (82) zur Absenkung der Abgastemperatur (T_{EG}) ausschließlich im ungefeuerten Betrieb betrieben wird und Sekundärluft in die Abgasanlage (22) fördert.

## Claims

1. Exhaust-gas aftertreatment system (20) for an internal combustion engine (10), comprising an exhaust system (22) having an exhaust-gas channel (24) in which, in the flow direction of an exhaust gas of the internal combustion engine (10), a first SCR catalytic converter (34, 36) is arranged near the engine and a second SCR catalytic converter (38) is arranged downstream of the first SCR catalytic converter (34, 36), wherein a first dosing element (64) for dosing a reducing agent into the exhaust-gas channel (24) is provided upstream of the first SCR catalytic converter (34, 36), and wherein a second dosing element (66) for dosing a reducing agent is arranged downstream of the first SCR catalytic converter (34, 36) and upstream of the second SCR catalytic converter (38), wherein means for lowering the exhaust-gas temperature (50, 52, 80, 82) are provided downstream of the first SCR catalytic converter (34, 36) and upstream of the second SCR catalytic converter (38), with which means the temperature of the exhaust-gas stream of the internal combustion engine (10) can be reduced before entry into the second SCR catalytic converter, wherein the means for lowering the exhaust-gas temperature (50, 52, 80, 82) comprise a heat exchanger (52), **characterized in that** the heat exchanger (52) has a main channel (58) and a bypass (60) for the exhaust-gas stream of the internal combustion engine (10), wherein the heat exchanger (52) is designed as a spiral heat exchanger, wherein the spirals pass through the bypass (60).

2. Exhaust-gas aftertreatment system (20) according to claim 1, **characterized in that** the heat exchanger (52) is a heat exchanger of an exhaust-gas heat-recovery system (50).

3. Exhaust-gas aftertreatment system (20) according to claim 1 or 2, **characterized in that** a control element (56) is provided on the heat exchanger (52), with which control element the exhaust-gas stream of the internal combustion engine (10) can be selectively routed through the main channel (58) or through the bypass (60).

4. Exhaust-gas aftertreatment system (20) according to one of claims 1 through 3, **characterized in that** a further SCR catalytic converter (54) is arranged downstream of the second dosing element (66) and upstream of the heat exchanger (52) or on the inlet side on the heat exchanger (52).

5. Exhaust-gas aftertreatment system (20) according to claim 1, **characterized in that** the means for reducing the exhaust-gas temperature (50, 52, 80, 82) comprise a secondary air system (80).

6. Exhaust-gas aftertreatment system (20) according to claim 1, **characterized in that** the means for lowering the exhaust-gas temperature (50, 52, 80, 82) comprise an exhaust-gas burner (82).

7. Exhaust-gas aftertreatment system (20) according to one of claims 1 through 6, **characterized in that** the exhaust-gas channel (24) has a branch (68) downstream of the first SCR catalytic converter (34, 36) and upstream of the second dosing element (66), at which branch a low-pressure exhaust-gas recirculation system (70) branches off from the exhaust-gas channel (24), wherein the means for lowering the exhaust-gas temperature (50, 52, 80, 82) are arranged downstream of the branch (68).

8. Exhaust-gas aftertreatment system (20) according to claim 7, **characterized in that** an introduction point (78) for a secondary air system (80) or for an exhaust-gas burner (82) is located downstream of the branch (68).

9. Exhaust-gas aftertreatment system (20) according to one of claims 1 through 8, **characterized in that** an ammonia-blocking catalytic converter (40) is arranged downstream of the second SCR catalytic converter (38).

10. Method for exhaust-gas aftertreatment of an internal combustion engine (10) having an exhaust-gas aftertreatment system (20) according to one of claims 1 through 9, **characterized in that** the exhaust-gas stream is conditioned by the means for lowering the exhaust-gas temperature (50, 52, 80, 82) in such a way that a thermal desorption of the ammonia deposited in the second SCR catalytic converter (38) is prevented.

11. Method for exhaust-gas aftertreatment according to claim 10, **characterized in that** a fill-level of the second SCR catalytic converter (38) with ammonia is determined, and, in the event of a rise in the exhaust-gas temperature (T_{EG}), the exhaust-gas stream of the internal combustion engine (10) is cooled at least until the exhaust-gas temperature (T_{EG}) has fallen again below a desorption temperature (To) associated with the current fill-level of the second SCR catalytic converter (38).

12. Method for exhaust-gas aftertreatment according to claim 10 or 11, **characterized in that** the second SCR catalytic converter (38) is conditioned to a temperature of 200 °C to 300 °C.

13. Method for exhaust-gas aftertreatment according to one of claims 10 through 12, **characterized in that** an exhaust-gas burner (82), for lowering the exhaust-gas temperature (T_{EG}), is operated exclusively in unfired mode and conveys secondary air into the exhaust-gas system (22).

## Revendications

1. Système de purification des gaz d'échappement (20) pour un moteur à combustion interne (10), comprenant une installation de gaz d'échappement (22) avec un canal de gaz d'échappement (24), dans lequel, dans la direction d'écoulement d'un gaz d'échappement du moteur à combustion interne (10), sont agencés un premier catalyseur SCR (34, 36) proche du moteur et, en aval du premier catalyseur SCR (34, 36), un second catalyseur SCR (38), dans lequel, en amont du premier catalyseur SCR (34, 36) est prévu un premier élément de dosage (64) pour le dosage d'un agent réducteur dans le canal de gaz d'échappement (24) et dans lequel en aval du premier catalyseur SCR (34, 36) et en amont du second catalyseur SCR (38) est disposé un second élément de dosage (66) pour le dosage d'un agent réducteur, dans lequel en aval du premier catalyseur SCR (34, 36) et en amont du second catalyseur SCR (38) sont prévus des moyens pour réduire la température de gaz d'échappement (50, 52, 80, 82), avec lesquels la température du flux de gaz d'échappement du moteur à combustion interne (10) peut être réduite avant l'entrée dans le second catalyseur SCR, dans lequel les moyens de réduction de la température de gaz d'échappement (50, 52, 80, 82) comprennent un échangeur de chaleur (52), **caractérisé en ce que** l'échangeur de chaleur (52) présente un canal principal (58) et une dérivation (60) pour le flux de gaz d'échappement du moteur à combustion interne (10), dans lequel l'échangeur de chaleur (52) est conçu comme un échangeur de chaleur en spirale, dans lequel les spirales s'étendent à travers la dérivation (60).

2. Système de purification des gaz d'échappement (20) selon la revendication 1, **caractérisé en ce que** l'échangeur de chaleur (52) est un échangeur de chaleur d'un système de récupération de chaleur des gaz d'échappement (50).

3. Système de purification des gaz d'échappement (20) selon la revendication 1 ou 2, **caractérisé en ce qu'**un élément de commande (56) est prévu sur l'échangeur de chaleur (52), avec lequel le flux de gaz d'échappement du moteur à combustion interne (10) peut être dirigé sélectivement à travers le canal principal (58) ou à travers la dérivation (60).

4. Système de purification des gaz d'échappement (20) selon l'une quelconque des revendications 1 à 3, **caractérisé en ce qu'**un autre catalyseur SCR (54) est disposé en aval du second élément de dosage (66) et en amont de l'échangeur de chaleur (52) ou côté entrée sur l'échangeur de chaleur (52).

5. Système de purification des gaz d'échappement (20) selon la revendication 1, **caractérisé en ce que** les moyens de réduction de la température de gaz d'échappement (50, 52, 80, 82) comprennent un système d'air secondaire (80).

6. Système de purification des gaz d'échappement (20) selon la revendication 1, **caractérisé en ce que** les moyens de réduction de la température de gaz d'échappement (50, 52, 80, 82) comprennent un brûleur de gaz d'échappement (82).

7. Système de purification des gaz d'échappement (20) selon l'une quelconque des revendications 1 à 6, **caractérisé en ce que** le canal de gaz d'échappement (24) présente une jonction (68) en aval du premier catalyseur SCR (34, 36) et en amont du second élément de dosage (66), au niveau de laquelle un retour de gaz d'échappement basse pression (70) est dérivé du canal de gaz d'échappement (24), dans lequel les moyens de réduction de la température de gaz d'échappement (50, 52, 80, 82) sont disposés en aval de la jonction (68).

8. Système de purification des gaz d'échappement (20) selon la revendication 7, **caractérisé en ce qu'**un point d'introduction (78) pour un système d'air secondaire (80) ou pour un brûleur de gaz d'échappement (82) se trouve en aval de la jonction (68).

9. Système de purification des gaz d'échappement (20) selon l'une quelconque des revendications 1 à 8, **caractérisé en ce qu'**un catalyseur de blocage d'ammoniac (40) est disposé en aval du second catalyseur SCR (38).

10. Méthode de purification des gaz d'échappement d'un moteur à combustion interne (10) avec un système de purification des gaz d'échappement (20) selon l'une quelconque des revendications 1 à 9, **caractérisée en ce que** le flux de gaz d'échappement est conditionné par les moyens de réduction de la température de gaz d'échappement (50, 52, 80, 82) de manière à éviter une désorption thermique de l'ammoniac accumulé dans le second catalyseur SCR (38).

11. Méthode de purification des gaz d'échappement selon la revendication 10, **caractérisée en ce qu'**un niveau de remplissage du second catalyseur SCR (38) avec de l'ammoniac est déterminé et le flux de gaz d'échappement du moteur à combustion interne (10), lors d'une augmentation de la température de gaz d'échappement (T_{EG}), est refroidi au moins jusqu'à ce que la température de gaz d'échappement (T_{EG}) ait de nouveau baissé sous une température de désorption (T_{D}) appartenant au niveau de remplissage actuel du second catalyseur SCR (38).

12. Méthode de purification des gaz d'échappement selon la revendication 10 ou 11, **caractérisée en ce que** le second catalyseur SCR (38) est conditionné à une température de 200 °C à 300 °C.

13. Méthode de purification des gaz d'échappement selon l'une quelconque des revendications 10 à 12, **caractérisée en ce qu'**un brûleur de gaz d'échappement (82) est utilisé pour la réduction de la température de gaz d'échappement (T_{EG}) uniquement en mode non alimenté et transporte l'air secondaire dans l'installation de gaz d'échappement (22).
